# EUROPEAN PATENT APPLICATION

(11) **EP 3 641 163 A1**
(43) Date of publication of application: **22.04.2020**
(21) Application number: 18834380.0
(22) Date of filing: 05.07.2018
(51) Int. Cl.: H04B 10/275, H04B 10/27, H04J 14/02

(54) **OPTICAL MODULE AND NETWORK DEVICE**

(30) Priority: 18.07.2017 CN 201710587085
(71) Applicant: Huawei Technologies Co., Ltd., Longgang District Shenzhen, Guangdong 518129 (CN)
(72) Inventor: CHEN, Guodao, Shenzhen Guangdong 518129 (CN); LI, Chunrong, Shenzhen Guangdong 518129 (CN)
(74) Representative: Gill Jennings & Every LLP
(86) International application number: PCT/CN2018/094705
(87) International publication number: WO 2019/015484

(57) **Abstract**

An optical module, a network device, an optical system, and a communications system are disclosed, to resolve a problem of relatively high usage of a processing bandwidth of an existing optical module. The optical module is located in a first network device in an access ring, the access ring further includes a second network device and a third network device, both the second network device and the third network device are in optical connection to the first network device, the first network device is applied to an access point, and the optical module includes a first multiplexer/demultiplexer and an optical receiver. The first multiplexer/demultiplexer is configured to: receive a first optical signal from the second network device, separate a second optical signal having a first wavelength from the first optical signal, and transfer the second optical signal to the optical receiver. The first multiplexer/demultiplexer is further configured to transfer a third optical signal that is separated from the first optical signal and that has a wavelength other than the first wavelength to the third network device. The optical receiver is configured to receive the second optical signal.

## Description

This application claims priority to Chinese Patent Application No. 201710587085.1, filed with the Chinese Patent Office on July 18, 2017 and entitled "OPTICAL MODULE AND NETWORK DEVICE", which is incorporated herein by reference in its entirety.

### TECHNICAL FIELD

This application relates to the field of optical communications technologies, and in particular, to an optical module and a network device.

### BACKGROUND

With the development of communications technologies, in a 5th generation (English: the 5th generation, 5G for short) communications technology, a higher requirement is imposed on a bandwidth of a bearer network.

In a current metropolitan area bearer network, networking is performed based on a packet transport network (English: packet transport network, PTN for short). An access ring is used at an access layer, the access ring includes a plurality of PTN devices, the plurality of PTN devices include a PTN device used as an access point and a PTN device used as a convergence point, and each PTN device includes an optical module. A bandwidth supported by an optical module included in each PTN device in an existing general access ring represents a bandwidth supported by the PTN device. However, because when the optical module in each PTN device receives an optical signal sent by a connected PTN device, the optical module generally converts all received signals into electrical signals; after converting the signals into the electrical signals, determines a signal that is to be processed by the local PTN device and a signal that is not to be processed by the local PTN device; and then converts the signal that is not to be processed by the local PTN device into a corresponding optical signal, and then forwards the optical signal to another PTN device connected to the local PTN device. It can be learned that a relatively large quantity of processing resources of the PTN device are occupied, and consequently, usage of a processing bandwidth of the optical module in the PTN device is relatively high.

### SUMMARY

This application provides an optical module and a network device, to resolve a problem of relatively high usage of a processing bandwidth of an existing optical module.

According to a first aspect, this application provides an optical module. The optical module is located in a first network device in an access ring, the access ring further includes a second network device and a third network device, both the second network device and the third network device are in optical connection to the first network device, the first network device is applied to an access point, and the optical module includes a first multiplexer/demultiplexer and an optical receiver, where the first multiplexer/demultiplexer is configured to: receive a first optical signal from the second network device, separate a second optical signal from the first optical signal, and transfer the second optical signal to the optical receiver, where the second optical signal has a first wavelength; the first multiplexer/demultiplexer is further configured to transfer a third optical signal to the third network device, where the third optical signal is an optical signal that is separated from the first optical signal and that has a wavelength other than the first wavelength; and the optical receiver is configured to receive the second optical signal, where an operating wavelength of the optical receiver is the first wavelength.

According to the foregoing design, the optical module in the access ring processes only uplink and downlink signals needed by the optical module, does not process a signal needing to be forwarded to another network device, and directly forwards the signal to the another network device by using the first multiplexer/demultiplexer, thereby reducing a processing pressure of the optical module, and effectively increasing a processing bandwidth of the optical module.

In a possible design, the optical module further includes a second multiplexer/demultiplexer and an optical transmitter, where the optical transmitter is configured to transmit a fourth optical signal to the second multiplexer/demultiplexer, where the fourth optical signal has the first wavelength; and the second multiplexer/demultiplexer is configured to: combine a fifth optical signal from the third network device and the fourth optical signal into a sixth optical signal, and send the sixth optical signal to the second network device. For example, the first multiplexer/demultiplexer and the second multiplexer/demultiplexer each may be a WDM, and are configured to: transmit an optical signal having the first wavelength, and reflect an optical signal having a wavelength other than the first wavelength, or are configured to: reflect an optical signal having the first wavelength, and transmit an optical signal having a wavelength other than the first wavelength.

According to the foregoing design, the second multiplexer/demultiplexer combines an optical signal sent by another network device and an optical signal sent by the optical transmitter, and then sends a combined signal from the network device of the second multiplexer/demultiplexer, so that the optical module provides optical signal transmission in two directions.

In a possible design, the optical module further includes an optical transmitter, where the optical transmitter is configured to transmit a seventh optical signal to the first multiplexer/demultiplexer, where the seventh optical signal has a second wavelength; and the first multiplexer/demultiplexer is further configured to: combine an eighth optical signal from the third network device and the seventh optical signal into a ninth optical signal, and send the ninth optical signal to the second network device.

According to the foregoing design, the first multiplexer/demultiplexer is further configured to perform multiplexing based on demultiplexing, and specifically combines an optical signal sent by another network device and an optical signal sent by the optical transmitter, and then sends a combined signal from the network device of the second multiplexer/demultiplexer, so that the optical module implements optical signal transmission in two directions by using the first multiplexer/demultiplexer.

According to a second aspect, an embodiment of this application provides an optical module. The optical module is located in a first network device in an access ring, the access ring further includes a second network device and a third network device, both the second network device and the third network device are in optical connection to the first network device, the first network device is applied to an access point, and the optical module includes a first multiplexer/demultiplexer and an optical transmitter, where the optical transmitter is configured to transmit a first optical signal to the first multiplexer/demultiplexer, where the first optical signal has a first wavelength; and the first multiplexer/demultiplexer is configured to: combine a second optical signal from the second network device and the first optical signal into a third optical signal, and send the third optical signal to the third network device.

The foregoing design provides the optical module including the first multiplexer/demultiplexer, and the first multiplexer/demultiplexer combines an optical signal sent by another network device and an optical signal sent by the optical transmitter, and then sends a combined signal from the network device of the first multiplexer/demultiplexer, so that the optical signal sent by the another network device is not processed, and is directly forwarded by using the first multiplexer/demultiplexer, thereby reducing a processing pressure of the optical module, and effectively increasing a processing bandwidth of the optical module.

In a possible design, the optical module further includes a second multiplexer/demultiplexer and an optical receiver, where the second multiplexer/demultiplexer is configured to: receive a fourth optical signal from the third network device, separate a fifth optical signal from the fourth optical signal, and transfer the fifth optical signal to the optical receiver, where the fifth optical signal has the first wavelength; the second multiplexer/demultiplexer is further configured to transfer a sixth optical signal to the second network device, where the sixth optical signal is an optical signal that is separated from the fourth optical signal and that has a wavelength other than the first wavelength; and the optical receiver is configured to receive the fifth optical signal, where an operating wavelength of the optical receiver is the first wavelength.

According to the foregoing design, the second multiplexer/demultiplexer separates a fourth optical signal corresponding to the operating wavelength of the optical receiver from an optical signal sent by another network device, and sends the optical signal to the optical receiver; separates an optical signal having a wavelength other than the operating wavelength of the optical receiver from the optical signal sent by the another network device, and sends the optical signal, so that a signal needing to be forwarded to another network device is not processed, and is directly forwarded to the another network device by using the second multiplexer/demultiplexer, thereby reducing a processing pressure of the optical module, and effectively increasing a processing bandwidth of the optical module. In addition, the optical module provides optical signal transmission in two directions.

In a possible design, the optical module further includes an optical receiver, where the first multiplexer/demultiplexer is further configured to: receive a seventh optical signal from the third network device, separate an eighth optical signal from the seventh optical signal, and transfer the eighth optical signal to the optical receiver, where the eighth optical signal has a second wavelength; the second multiplexer/demultiplexer is further configured to transfer a ninth optical signal to the second network device, where the ninth optical signal is an optical signal that is separated from the seventh optical signal and that has a wavelength other than the second wavelength; and the optical receiver is configured to receive the eighth optical signal, where an operating wavelength of the optical receiver is the first wavelength.

According to the foregoing design, the first multiplexer/demultiplexer is further configured to perform demultiplexing in addition to multiplexing. The first multiplexer/demultiplexer separates an optical signal corresponding to the operating wavelength of the optical receiver from an optical signal sent by another network device, and sends the optical signal to the optical receiver; separates an optical signal having a wavelength other than the operating wavelength of the optical receiver from the optical signal sent by the another network device, and sends the optical signal, so that a signal needing to be forwarded to another network device is not processed, and is directly forwarded to the another network device by using the first multiplexer/demultiplexer, thereby reducing a processing pressure of the optical module, and effectively increasing a processing bandwidth of the optical module. In addition, the optical module provides optical signal transmission in two directions.

According to a third aspect, an embodiment of this application further provides a network device. The network device is applied to an access point in an access ring, and the network device includes the optical module described in any design of the first aspect or the second aspect.

According to a fourth aspect, an embodiment of this application provides an optical system. The optical system is applied to a convergence point in an access ring, the access ring includes N access points, operating wavelengths of optical transmitters included in the N access points are different, the optical system includes N optical modules, the N access points are in a one-to-one correspondence to the N optical modules, an operating wavelength of an optical receiver included in the N^{th} optical module is the same as an operating wavelength of an optical transmitter included in an N^{th} access point, and N is a positive integer greater than 1. A first optical module included in the N optical modules includes a first multiplexer/demultiplexer and an optical receiver, and an operating wavelength of the optical receiver is a first wavelength. The first multiplexer/demultiplexer is configured to receive a first optical signal. Specifically, when a device connected to the first optical module is another optical module in the optical system, the first multiplexer/demultiplexer receives a first optical signal from the another optical module; or when a device connected to the first optical module is an access point, the first multiplexer/demultiplexer receives a first optical signal from the access point. The first multiplexer/demultiplexer is configured to: separate, from the first optical signal, a second optical signal that is from a first access point included in the N access points, and transfer the second optical signal to the optical receiver, where the second optical signal has the first wavelength. The optical receiver is configured to receive the second optical signal sent by the first multiplexer/demultiplexer. The first multiplexer/demultiplexer is further configured to transfer a third optical signal to a second optical module in the N optical modules, where the second optical module is in optical connection to the first optical module, and the third optical signal is an optical signal that is separated from the first optical signal and that has a wavelength other than the first wavelength.

According to the foregoing design, an optical module in the optical system of the convergence point processes only uplink and downlink signals needed by the optical module, does not process an optical signal needing to be forwarded to another access point or another module in the optical system, and directly forwards the optical signal by using the first multiplexer/demultiplexer, thereby reducing a processing pressure of the optical module, and effectively increasing a processing bandwidth of the optical module.

In a possible design, the first optical module further includes a second multiplexer/demultiplexer and an optical transmitter, where the optical transmitter is configured to transmit a fourth optical signal to the second multiplexer/demultiplexer, where the fourth optical signal has the first wavelength; and the second multiplexer/demultiplexer is configured to: combine a fifth optical signal from the second optical module and the fourth optical signal into a sixth optical signal, and send the sixth optical signal. When the first optical module is connected to another optical module in the optical system, the second multiplexer/demultiplexer sends the sixth optical signal to the another optical module; or when the first optical module is connected to an access point, the second multiplexer/demultiplexer sends the sixth optical signal to the access point.

According to the foregoing design, the second multiplexer/demultiplexer combines an optical signal sent by the second optical module and an optical signal sent by the optical transmitter, and then sends a combined signal from the first optical module of the second multiplexer/demultiplexer to a device connected to the first optical module, so that the optical module provides optical signal transmission in two directions.

In a possible design, the first optical module further includes an optical transmitter, where the optical transmitter is configured to transmit a seventh optical signal to the first multiplexer/demultiplexer, where the seventh optical signal has a second wavelength; and the first multiplexer/demultiplexer is further configured to: combine an eighth optical signal from the second optical module and the seventh optical signal into a ninth optical signal, and send the ninth optical signal.

According to the foregoing design, the first multiplexer/demultiplexer is further configured to combine an optical signal sent by the second optical module and an optical signal sent by the optical transmitter, and then send a combined signal from the first optical module of the first multiplexer/demultiplexer to a device connected to the first optical module, so that the optical module provides optical signal transmission in two directions.

According to a fifth aspect, an embodiment of this application provides an optical system. The optical system is applied to a convergence point in an access ring, the access ring includes N access points, operating wavelengths of optical receivers included in the N access points are different, the optical system includes N optical modules, the N access points are in a one-to-one correspondence to the N optical modules, an operating wavelength of an optical transmitter included in the N^{th} optical module is the same as an operating wavelength of an optical receiver included in an N^{th} access point, and N is a positive integer greater than 1. A first optical module included in the N optical modules includes a first multiplexer/demultiplexer and an optical transmitter, and an operating wavelength of the optical transmitter is a first wavelength. The optical transmitter is configured to transmit a first optical signal to the first multiplexer/demultiplexer, where the first optical signal has the first wavelength. The first multiplexer/demultiplexer is configured to: combine a second optical signal from a second optical module in the N optical modules and the first optical signal into a third optical signal, and send the third optical signal, where the second optical module is in optical connection to the first optical module. When the first optical module is connected to another optical module in the optical system, the first multiplexer/demultiplexer sends the third optical signal to the another optical module; or when the first optical module is connected to an access point, the first multiplexer/demultiplexer sends the third optical signal to the access point.

According to the foregoing design, the first multiplexer/demultiplexer combines an optical signal sent by another optical module and an optical signal sent by the optical transmitter, and then sends a combined signal from the first optical module of the first multiplexer/demultiplexer, so that the optical signal sent by the another optical module is not processed, and is directly forwarded by using the first multiplexer/demultiplexer, thereby reducing a processing pressure of the optical module, and effectively increasing a processing bandwidth of the optical module.

In a possible design, the optical module further includes a second multiplexer/demultiplexer and an optical receiver, where the second multiplexer/demultiplexer is configured to receive a fourth optical signal; the second multiplexer/demultiplexer is configured to: separate, from the fourth optical signal, a fifth optical signal that is from a first access point included in the N access points, and transfer the fifth optical signal to the optical receiver, where the fifth optical signal has the first wavelength; the optical receiver is configured to receive the fifth optical signal sent by the second multiplexer/demultiplexer; and the second multiplexer/demultiplexer is further configured to transfer a sixth optical signal to a second optical module in the N optical modules, where the second optical module is in optical connection to the first optical module, and the sixth optical signal is an optical signal that is separated from the fourth optical signal and that has a wavelength other than the first wavelength.

According to the foregoing design, the second multiplexer/demultiplexer separates a fourth optical signal corresponding to the operating wavelength of the optical receiver from the received optical signal, and sends the optical signal to the optical receiver; and sends, from the first optical module to the second optical module, an optical signal that is separated from the received optical signal and that has another wavelength, so that a signal needing to be forwarded to another optical module is not processed, and is directly forwarded to the another optical module by using the second multiplexer/demultiplexer, thereby reducing a processing pressure of the optical module, and effectively increasing a processing bandwidth of the optical module. In addition, the optical module provides optical signal transmission in two directions.

In a possible design, the first optical module further includes an optical receiver, where the first multiplexer/demultiplexer is configured to receive a seventh optical signal; the first multiplexer/demultiplexer is configured to: separate, from the seventh optical signal, an eighth optical signal that is from a first access point included in the N access points, and transfer the eighth optical signal to the optical receiver, where the eighth optical signal has the first wavelength; the optical receiver is configured to receive the eighth optical signal sent by the first multiplexer/demultiplexer; and the second multiplexer/demultiplexer is further configured to transfer a ninth optical signal to a second optical module in the N optical modules, where the second optical module is in optical connection to the first optical module, and the ninth optical signal is an optical signal that is separated from the seventh optical signal and that has a wavelength other than the first wavelength.

According to a sixth aspect, an embodiment of this application further provides a network device. The network device is applied to a convergence point in an access ring, and the network device includes the optical system described in any design of the fourth aspect or the fifth aspect.

According to the foregoing design, the first multiplexer/demultiplexer is further configured to perform demultiplexing in addition to multiplexing. The first multiplexer/demultiplexer separates an optical signal corresponding to the operating wavelength of the optical receiver from the received optical signal, and sends the optical signal to the optical receiver; separates an optical signal having a wavelength other than the operating wavelength of the optical receiver from the received optical signal, and sends the optical signal to the second optical module, so that a signal needing to be forwarded to another optical module is not processed, and is directly forwarded to the another optical module by using the first multiplexer/demultiplexer, thereby reducing a processing pressure of the optical module, and effectively increasing a processing bandwidth of the optical module. In addition, the optical module provides optical signal transmission in two directions.

According to a sixth aspect, an embodiment of this application provides a network device. The network device is applied to a convergence point in an access ring, and the network device includes the optical system described in any design of the fourth aspect or the fifth aspect.

According to a seventh aspect, an embodiment of this application provides a communications system, including the network device described in any design of the third aspect and the network device described in any design of the sixth aspect.

### BRIEF DESCRIPTION OF DRAWINGS

FIG. 1 is an architectural diagram of a metropolitan area network according to an embodiment of this application;
FIG. 2 is a schematic structural diagram of an access ring according to an embodiment of this application;
FIG. 3 is a schematic structural diagram of a two-fiber unidirectional access ring according to an embodiment of this application;
FIG. 4 is a schematic structural diagram of an optical module applied to an access point according to an embodiment of this application;
FIG. 5A is a schematic diagram of filtering of a second multiplexer/demultiplexer according to an embodiment of this application;
FIG. 5B is a schematic diagram of filtering of a first multiplexer/demultiplexer according to an embodiment of this application;
FIG. 6 is a schematic structural diagram of an optical system applied to a convergence point according to an embodiment of this application;
FIG. 7 is a schematic structural diagram of an access point 2 according to an embodiment of this application;
FIG. 8 is a schematic structural diagram of a single-fiber unidirectional access ring according to an embodiment of this application;
FIG. 9A is a schematic structural diagram of an optical module applied to an access point according to an embodiment of this application;
FIG. 9B is a schematic structural diagram of a fifth multiplexer/demultiplexer according to an embodiment of this application;
FIG. 10 is a schematic structural diagram of an optical system applied to a convergence point according to an embodiment of this application; and
FIG. 11 is a schematic structural diagram of an access point 2 according to an embodiment of this application.

### DETAILED DESCRIPTION OF EMBODIMENTS

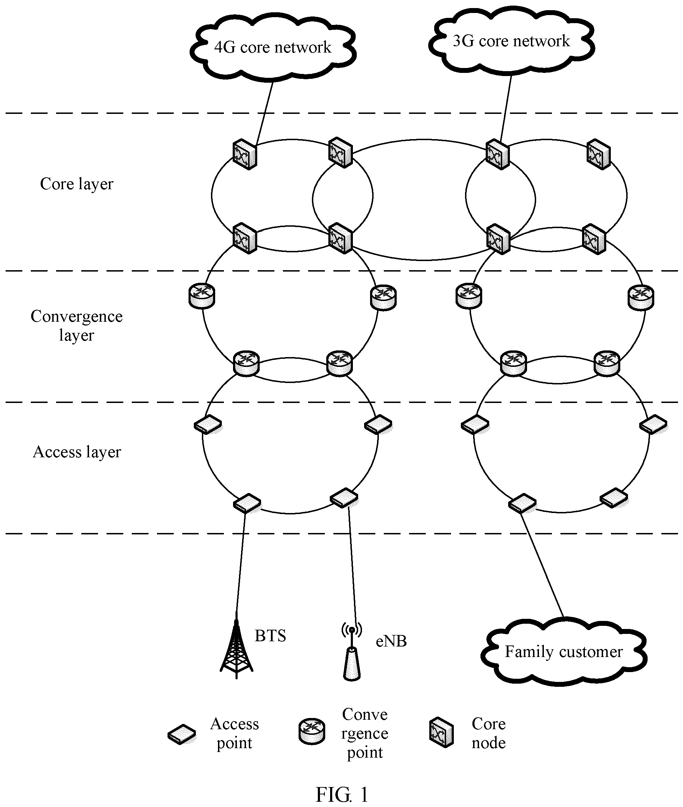

FIG. 1 is an architectural diagram of a metropolitan area network according to an embodiment of this application. The metropolitan area network mainly includes three layers: an access layer, a convergence layer, and a core layer. The core layer mainly bears and transmits high-bandwidth service and completes interconnection and interworking with an existing network. The existing network may include an asynchronous transfer mode (English: asynchronous transfer mode, ATM for short) network, a digital data network (English: digital data network, DDN for short), an internet protocol (English: internet protocol, IP for short) network, and the like. A main function of the convergence layer is to provide convergence and distribution processing of user service data for a service access node, and implement service class classification of services. The access layer performs bandwidth and service allocation by using a plurality of access technologies, and implements user access, and an access layer device implements multiplexing and transmission of a plurality of services.

During networking, the access layer and the convergence layer still use a ring structure to construct a system. The access layer uses a gigabit Ethernet (English: gigabit ethernet, GE for short) rate, and the convergence layer uses a 10-gigabit Ethernet rate to construct a ring, and uses a ring structure including two convergence nodes to prevent a single node failure risk of a convergence point and a backbone node. Each backbone layer node is directly connected to a related core layer node at a backbone layer by using a GE or 10-gigabit Ethernet link provided by an optical transport network (English: optical transport network, OTN for short). The following provides descriptions by using an example in which networking is performed by using a packet transport network (English: packet transport network, PTN for short) device. A person skilled in the art may understand that this application is not limited to networking based on a PTN device, for example, any network device such as a router may be alternatively used for networking, and this is not specifically limited in this application.

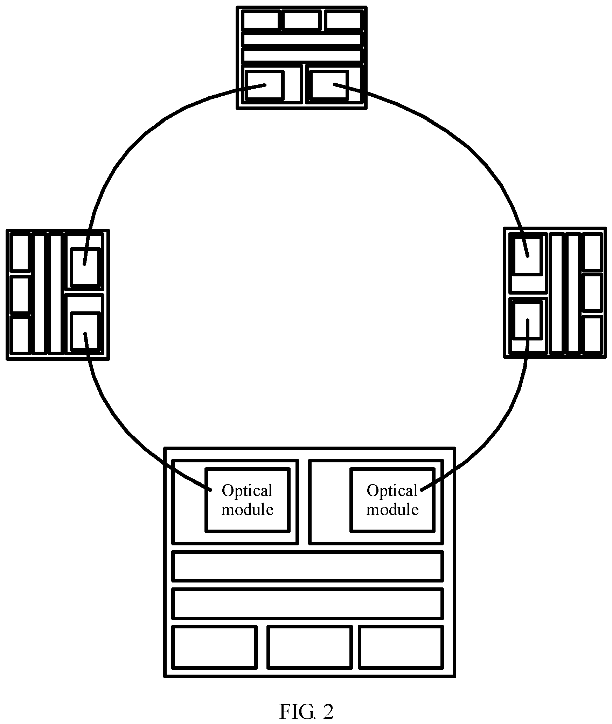

To increase a network bandwidth of an access ring, currently, a manner of increasing a processing bandwidth of an optical module in each PTN device (an access point or a convergence point) in the access ring is generally used, as shown in FIG. 2. However, if a processing bandwidth of each optical module is upgraded from 10 Gto 100 G, costs increase by 30 to 50 times, leading to a great increase in overall costs of the PTN device. For example, in FIG. 2, when a PTN device 2 receives an optical signal sent by a connected PTN device 1, an optical module in the PTN device 2 generally converts all received signals into electrical signals; after converting the signals into the electrical signals, determines a signal that is to be processed by the PTN device 2 and a signal that is not to be processed by the PTN device 2; and then converts the signal that is not to be processed by the PTN device 2 into a corresponding optical signal, and then forwards the optical signal to a PTN device 3 connected to the PTN device 2. It can be learned that in this manner, a relatively large quantity of processing resources of the PTN device are occupied, and consequently, usage of a processing bandwidth of the optical module in the PTN device is relatively high. Even if a bandwidth of each optical module is upgraded to 100 G, because a signal needing to be forwarded occupies a bandwidth of the optical module in the PTN device, an actual bandwidth of each optical module cannot reach 100 G. If an optical module in each PTN device processes only uplink and downlink signals needed by the local PTN device, does not process a signal needing to be forwarded to another access point or a convergence point, and directly forwards the signal, a pressure of the PTN device in the access ring is reduced to some extent, power consumption of the PTN device is reduced, and usage of a bandwidth of the optical module is reduced, so that the optical module can have a higher bandwidth to process the signal needed by the local PTN device, and an actual processing bandwidth of the PTN device is increased.

Based on this, an embodiment of this application provides an optical module and a network device. An optical module in an access ring processes only uplink and downlink signals needed by the optical module, does not process a signal needing to be forwarded to another PTN device, and directly forwards the signal to the another PTN device by using a multiplexer/demultiplexer, thereby reducing a processing pressure of the optical module, and effectively increasing a processing bandwidth of the optical module.

In addition, it should be noted that in the descriptions of this application, the network device may be any device that can use an optical module in the access ring, for example, the foregoing PTN device or an OTN device. The network device may be an access point in the access ring, or may be a convergence point. "A plurality" in the descriptions of this application means "at least two". In the descriptions of this application, terms such as "first" and "second" are merely used for distinguishing, but should not be understood as indicating or implying relative importance, or should not be understood as indicating or implying a sequence.

In this embodiment of this application, the access ring may support bidirectional transmission, which may be specifically two-fiber unidirectional transmission or single-fiber bidirectional transmission. The two-fiber unidirectional transmission means that any two network devices in the access ring are connected by using two fibers, and directions of transmitting optical signals by using the two fibers are opposite. The single-fiber bidirectional transmission means that any two network devices in the access ring are connected by using one fiber, and the fiber can be used to transmit optical signals in two directions.

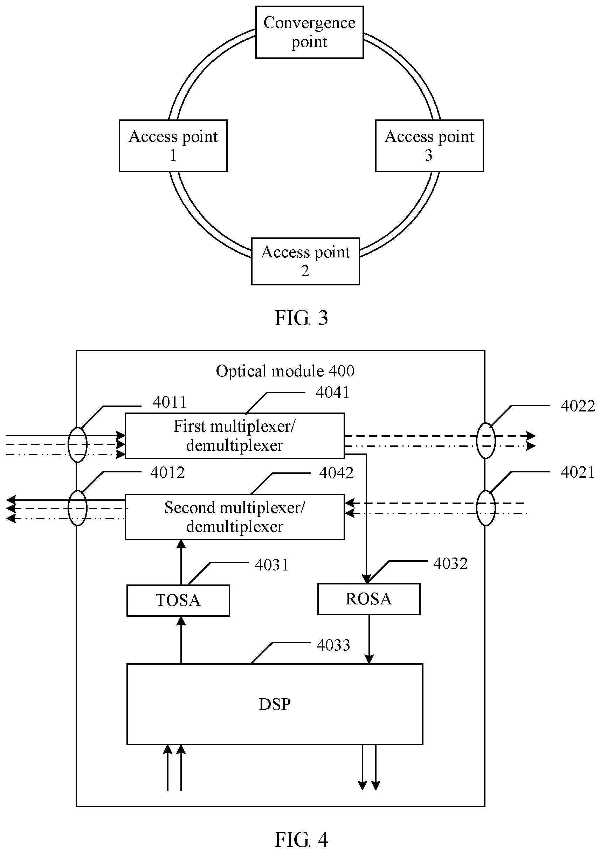

FIG. 3 is a schematic structural diagram of an access ring according to an embodiment of this application. The access ring uses a two-fiber unidirectional manner. The access ring may include N access points and a convergence point. FIG. 3 merely shows an example, and does not specifically limit quantities of access points and convergence points included in the access ring. Descriptions are provided herein by using an example in which the access ring includes three access points. The access points included in the access ring are respectively an access point 1, an access point 2, and an access point 3. The access point 2 is connected to both the access point 1 and the access point 3 by using fibers, and the convergence point is connected to both the access point 1 and the access point 3 by using fibers.

The following provides descriptions by using a structure of the access point 2 as an example. For the other access points, refer to the structure of the access point 2. The access point 2 includes an optical module 400. As shown in FIG. 4, the optical module 400 includes a first multiplexer/demultiplexer 4041, a second multiplexer/demultiplexer 4042, an optical transmitter 4031, and an optical receiver 4032. Operating wavelengths of optical modules included in different access points are different. An operating wavelength of the optical module 400 is a wavelength used by the optical transmitter in the optical module 400 to transmit an optical signal (namely, an operating wavelength of the optical transmitter), and a wavelength used by the optical receiver to receive an optical signal (namely, an operating wavelength of the optical receiver). Operating wavelengths of an optical transmitter and an optical receiver in a same optical module may be the same or may be different. This embodiment is described by using an example in which operating wavelengths of an optical transmitter and an optical receiver in a same optical module are the same. The operating wavelength of the optical module included in the access point 1 is λ1, an operating wavelength of an optical module included in the access point 2 is λ1, and an operating wavelength of the optical module included in the access point 3 is λ3.

The first multiplexer/demultiplexer 4041 receives an optical signal 1 from the access point 1, and then separates an optical signal 2 and an optical signal 3 from the optical signal 1, where a wavelength of the optical signal 2 is λ2, and the optical signal 3 is an optical signal having a wavelength other than the wavelength λ2 in the optical signal 1.

The first multiplexer/demultiplexer 4041 transfers the optical signal 1 to the optical receiver 4031, and transfers the optical signal 3 to the access point 3, so that the optical receiver 4031 receives the optical signal 1, where an operating wavelength of the optical receiver 4031 is λ2.

The optical transmitter 4031 is configured to transmit an optical signal 4 to the second multiplexer/demultiplexer 4042, where an operating wavelength of the optical transmitter 4031 is λ1, that is, a wavelength of the optical signal 4 is also λ2.

The second multiplexer/demultiplexer 4042 is configured to: receive an optical signal 5 from the access point 3, combine the optical signal 5 and the optical signal 4 into an optical signal 6, and send the optical signal 6 to the access point 1.

Optionally, the optical transmitter 4031 may be an optical transmission module (English: transmitter optical subassembly, TOSA for short) 4031, and the optical receiver 4032 may be an optical receiving module (English: receiver optical subassembly, ROSA for short) 4032.

Optionally, the optical module 400 may further include a first optical input interface 4011, a first optical output interface 4012, a second optical input interface 4021, and a second optical output interface 4022.

The first multiplexer/demultiplexer 4041 and the second multiplexer/demultiplexer 4042 each may transmit an optical signal having a wavelength and reflect an optical signal having the other wavelength, or reflect an optical signal having a wavelength and transmit an optical signal having the other wavelength, for example, may be a wavelength division multiplexer (English: wavelength division multiplexing, WDM for short). This embodiment of this application is described by using an example in which the first multiplexer/demultiplexer 4041 and the second multiplexer/demultiplexer 4042 each may transmit an optical signal having a wavelength and reflect an optical signal having the other wavelength.

Optionally, the first multiplexer/demultiplexer 4041 may include two optical interfaces: an optical interface 11 and an optical interface 12. The optical interface 11 may be used as the first optical output interface 4012 of the optical module, and the optical interface 12 may be used as the second optical input interface 4021.

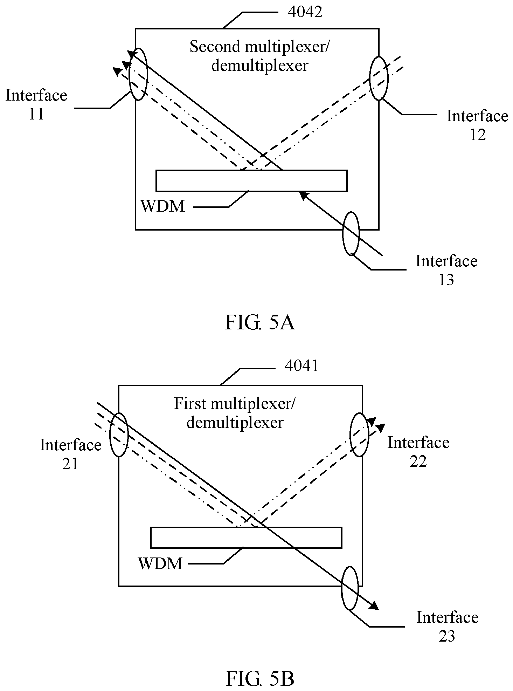

Optionally, the first multiplexer/demultiplexer 4041 may further include an optical interface 13. The optical interface 13 is configured to transmit, to the first multiplexer/demultiplexer 4041, the optical signal 4 that is sent by the TOSA 4031 and that has the wavelength λ2, as shown in FIG. 5B. Likewise, the second multiplexer/demultiplexer 4042 may include two optical interfaces: an optical interface 21, an optical interface 12, and an optical interface 23. The optical interface 21 may be used as the first optical input interface 4011 of the optical module, and the optical interface 22 may be used as the second optical output interface 4022. Optionally, the second multiplexer/demultiplexer 4042 may further include an optical interface 23. The second multiplexer/demultiplexer 4042 transmits, through the optical interface 23, the optical signal 1 having the wavelength λ2 to the ROSA 4032, as shown in FIG. 5A.

The TOSA 4031 transmits the optical signal 4 having the wavelength λ2 to the first multiplexer/demultiplexer 4041. The first multiplexer/demultiplexer 4041 not only receives the optical signal 4 transmitted by the TOSA 4031, but also receives the optical signal 5 that is sent by the access point 3 through the second optical input interface 4021 and that has a wavelength other than the wavelength λ2, so that the first multiplexer/demultiplexer 4041 combines the optical signal 4 transmitted by the TOSA 4031 and the optical signal 5 into the optical signal 6, and then sends the optical signal 6 to the access point 1 through the first optical output interface 4012. Referring to FIG. 4, a solid line represents the optical signal 4 having the wavelength λ2, and a dashed line represents the optical signal 5. After the optical signal 4 that corresponds to the solid line and that has the wavelength λ2 is sent by the TOSA 4031, the optical signal 4 and the optical signal 5 that enters through the second optical input interface 4021 and that corresponds to the dashed line converge at the first multiplexer/demultiplexer 4041, and then are sent through the first optical output interface 4012.

The second multiplexer/demultiplexer 4042 receives the optical signal 1 that is sent by the access point 1 through the first optical input interface 4011, separates the optical signal 2 having the wavelength λ2 from the received optical signal 1, and sends the optical signal 2 to the second multiplexer/demultiplexer 4042; and sends the optical signal 3 having a wavelength other than the wavelength λ2 in the received optical signal 1 to the access point 3 in the access ring through the second optical output interface 4022. The ROSA 4032 receives the optical signal 1 sent by the second multiplexer/demultiplexer 4042. In FIG. 4, the optical signal 2 that corresponds to a solid line and that has the wavelength λ2 and the optical signal 3 corresponding to the dashed line enter the second multiplexer/demultiplexer 4042 through the first optical input interface 4011, and after the second multiplexer/demultiplexer 4042 performs filtering, the optical signal 2 corresponding to the solid line is sent to the ROSA 4032, and the optical signal 3 corresponding to the dashed line is sent through the second optical output interface 4022.

The optical module 400 in this embodiment of this application may use a pulse amplitude modulation (English: pulse amplitude modulation, PAM for short) signal. PAM is a hot signal transmission technology for high speed signal interconnection at a next generation data center, and may be widely applied to electrical signal or optical signal transmission on a 200G/400G optical interface. A conventional digital signal mostly is a non-return-to-zero (English: non-return-to-zero, NRZ for short) signal. To be specific, a high signal level and a low signal level are used to represent information 1 and 0 of a to-be-transmitted digital logical signal, and 1-bit logical information may be transmitted in each signal symbol period. For a PAM 4 signal, four different signal levels are used for signal transmission, and 2-bit (bit) logical information (0, 1, 2, 3) may be represented in each symbol period. Because 2-bit information may be transmitted in each symbol period by using the PAM 4 signal, to achieve a same signal transmission capability, a symbol rate of the PAM 4 signal needs to reach only a half of that of the NRZ signal. Therefore, a loss caused by a transmission channel to the PAM 4 signal is greatly reduced. With the development of future technologies, a possibility of performing information transmission by using a PAM 8 signal of more levels and even a PAM 16 signal of more levels is not excluded.

Optionally, the optical module 400 may further include a first signal processor 4033. As shown in FIG. 4, the first signal processor 4033 combines received at least two electrical signals into one first electrical signal, and then sends the combined first electrical signal to the TOSA 4031, so that the TOSA 4031 converts the first electrical signal into an optical signal 4 having the wavelength λ1, and sends the optical signal 4 to the first multiplexer/demultiplexer 4041, and the first multiplexer/demultiplexer 4041 sends the optical signal 4 through the first optical output interface 4012. The first signal processor 4033 may be a general purpose processor, a digital signal processor (DSP), an application-specific integrated circuit, a field programmable gate array or another programmable logic device, a discrete gate or transistor logic device, a discrete hardware component, or the like. In FIG. 4, that the first signal processor 4033 is a DSP 4034 is used as an example.

The optical module 400 may further include a laser diode driver (DRV), so that the first signal processor 4033 combines the received at least two electrical signals into one electrical signal 1, and then sends the electrical signal 1 to the DRV, and the DRV drives the TOSA 4031 to convert the electrical signal 1 into the optical signal 4 having the wavelength λ2.

The ROSA 4032 is further configured to: convert the received optical signal 2 that is sent by the second multiplexer/demultiplexer 4042 and that has the wavelength λ2 into an electrical signal 2, and send the electrical signal 2 to the first signal processor 4033. The first signal processor 4033 processes the received electrical signal 2 into at least two electrical signals, and sends the electrical signals.

The at least two electrical signals may be NRZ signals. The first electrical signal and the second electrical signal may be PAM signals. For example, a line board (for example, an application-specific integrated circuit (English: application specific integrated circuit, ASIC for short)) in the access point 2 can process two NRZ electrical signals, so that the first electrical signal may be a PAM 4 signal.

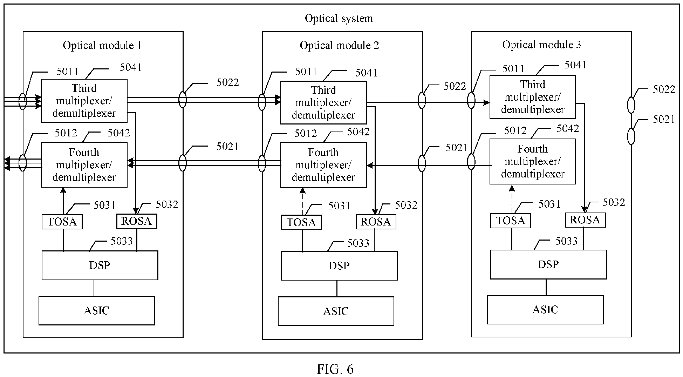

In this embodiment of this application, the convergence point may use an optical system including a plurality of the optical modules 400 shown in FIG. 4, and a quantity of the optical modules in the optical system is equal to a quantity of access points in the access ring. In an architecture of the access ring shown in FIG. 3, the convergence point is connected to both the access point 1 and the access point 3. The convergence point may include one or two optical systems. A structure of an optical module included in the optical system is the same as a structure of an optical module included in an access point. The optical system includes three optical modules: an optical module 1, an optical module 2, and an optical module 3. The optical module 2 is in optical connection to both the optical module 1 and the optical module 3, and the optical module 1 is connected to the access point 1. FIG. 6 is a schematic structural diagram of the convergence point.

The optical module 1 corresponds to the access point 1, the optical module 2 corresponds to the access point 2, and the optical module 3 corresponds to the access point 3. Specifically, an operating wavelength of an optical receiver included in the optical module 1 is the same as an operating wavelength of an optical transmitter included in the access point 1; an operating wavelength of an optical transmitter included in the optical module 1 is the same as an operating wavelength of an optical receiver included in the access point 1; an operating wavelength of an optical receiver included in the optical module 2 is the same as an operating wavelength of an optical transmitter included in the access point 2; an operating wavelength of an optical transmitter included in the optical module 2 is the same as an operating wavelength of an optical receiver included in the access point 2; an operating wavelength of an optical receiver included in the optical module 3 is the same as an operating wavelength of an optical transmitter included in the access point 3; and an operating wavelength of an optical transmitter included in the optical module 3 is the same as an operating wavelength of an optical receiver included in the access point 3. In this embodiment of this application, that operating wavelengths of an optical transmitter and an optical receiver in a same access point are the same is used as an example, so that operating wavelengths of an optical receiver and an optical transmitter in a same optical module in the optical system are the same. For convenience of subsequent description, operating wavelengths of an optical transmitter and an optical receiver in an access point are collectively referred to as an operating wavelength of the access point, and operating wavelengths of an optical receiver and an optical transmitter in an optical module in the optical system are collectively referred to as an operating wavelength of the optical module.

In this embodiment of this application, that the operating wavelength of the access point 1 is λ1, the operating wavelength of the access point 2 is λ2, and the operating wavelength of the access point 3 is λ3 is used as an example, so that the operating wavelength of the optical module 1 is λ1, the operating wavelength of the optical module 2 is λ2, and the operating wavelength of the optical module 3 is λ3. Because the optical module 1, the optical module 2, and the optical module 3 are of a same structure, the following provides descriptions by using only the optical module 2 as an example, and the optical module 1 and the optical module 3 are not described repeatedly. The optical module 2 includes a third multiplexer/demultiplexer 5041, a fourth multiplexer/demultiplexer 5042, an optical transmitter 5031, and an optical receiver 5032.

The third multiplexer/demultiplexer 5041 is configured to: receive an optical signal 111 from the optical module 1, separate, from the optical signal 111, an optical signal 112 that is from the access point 2, and transfer the optical signal 112 to the optical receiver 5032, where a wavelength of the optical signal 112 is λ2.

The optical receiver 5032 is configured to receive the optical signal 112 sent by the third multiplexer/demultiplexer 5041.

The third multiplexer/demultiplexer 5041 is further configured to: separate an optical signal 113 from the optical signal 111, and send the optical signal 113 to the optical module 3, where the optical signal 113 is an optical signal that is separated from the optical signal 111 and that has a wavelength other than the wavelength λ2.

The optical transmitter 5031 is configured to transmit an optical signal 114 to the fourth multiplexer/demultiplexer 5042, where an operating wavelength of the optical transmitter 5031 is λ2, that is, a wavelength of the optical signal 114 is also λ1. The optical signal 114 corresponding to the operating wavelength λ2 is an optical signal needing to be sent to the access point 2.

The fourth multiplexer/demultiplexer 5042 is configured to: receive an optical signal 115 from the optical module 3, combine the optical signal 115 and the optical signal 114 into an optical signal 116, and send the optical signal 116 to the optical module 1.

It should be noted that the optical transmitter 5031 may be a TOSA 5031, and the optical receiver 5032 may be an ROSA 5032.

Optionally, the optical module 2 may further include a first optical input interface 5011, a first optical output interface 5012, a second optical input interface 5021, and a second optical output interface 5022. The first optical input interface 5011 and the first optical output interface 5012 are configured to connect to the optical module 1; and the second optical input interface 5021 and the second optical output interface 5022 are configured to connect to the optical module 3. The first optical input interface 5011 is configured to receive the optical signal 111 sent by the optical module 1; the first optical output interface 5012 is configured to send the optical signal 116 to the optical module 1; the second optical output interface 5022 is configured to send the optical signal 113 to the optical module 3; and the second optical input interface 5021 is configured to receive the optical signal 114 sent by the optical module 3.

Optionally, the third multiplexer/demultiplexer 5041 may include two optical interfaces. The first interface may be used as the first optical output interface 5012 of the optical module; and the second interface may be used as the second optical input interface 5021. Optionally, the third multiplexer/demultiplexer 5041 may further include a third optical interface, configured to transmit, to the third multiplexer/demultiplexer 5041, the optical signal 114 that is sent by the TOSA 5031 and that has the wavelength λ2. Likewise, the fourth multiplexer/demultiplexer 5042 is similar, and details are not described herein again.

The third multiplexer/demultiplexer 5041 and the fourth multiplexer/demultiplexer 5042 each may transmit an optical signal having a wavelength and reflect an optical signal having the other wavelength, or reflect an optical signal having a wavelength and transmit an optical signal having the other wavelength, for example, may be a WDM. This embodiment of this application is described by using an example in which the third multiplexer/demultiplexer 5041 and the fourth multiplexer/demultiplexer 5042 each may transmit an optical signal having a wavelength and reflect an optical signal having the other wavelength.

Optionally, the optical module 2 may further include a second signal processor 5033. The second signal processor 5033 combines received at least two electrical signals into one first electrical signal, and then sends the combined first electrical signal to the TOSA 5031, so that the TOSA 5031 converts the first electrical signal into the optical signal 114 having the wavelength λ2, and sends the optical signal 114 to the third multiplexer/demultiplexer 5041, and the third multiplexer/demultiplexer 5041 sends the optical signal 114 through the first optical output interface 5012. The second signal processor 5033 may be a general purpose processor, a digital signal processor (DSP), an application-specific integrated circuit, a field programmable gate array or another programmable logic device, a discrete gate or transistor logic device, a discrete hardware component, or the like. In FIG. 6, that the second signal processor 5033 is a DSP 5033 is used as an example.

The optical module 2 may further include a laser diode driver (DRV), so that the second signal processor 5033 combines the received at least two electrical signals into one electrical signal 1, and then sends the electrical signal 1 to the DRV, and the DRV drives the TOSA 4031 to convert the electrical signal 1 into the optical signal 114 having the wavelength λ2.

The ROSA 4032 is further configured to: convert the received optical signal 112 that is sent by the fourth multiplexer/demultiplexer 5042 and that has the wavelength λ2 into an electrical signal 2, and send the electrical signal 2 to the second signal processor 5033. The second signal processor 5033 processes the received second electrical signal into at least two electrical signals, and sends the electrical signals.

The at least two electrical signals may be NRZ signals. The electrical signal 1 and the electrical signal 2 may be PAM signals. For example, a line board (for example, an ASIC) in the optical module 2 can process two NRZ electrical signals, so that the electrical signal 1 and the electrical signal 2 may be PAM 4 signals.

In this embodiment of this application, a same access point may include two same optical modules, and a same convergence point may include two same optical systems. Two optical modules of a same access point protect each other, and two optical systems of a same convergence point protect each other. Operating wavelengths of two optical modules in a same access point may be the same or may be different. When operating wavelengths of two optical modules in a same access point are the same, operating wavelengths of two optical systems in the same access point are the same. When operating wavelengths of two optical modules in a same access point are different, operating wavelengths of two optical systems in a convergence point are also different. For example, operating wavelengths of two optical modules in the access point 1 are respectively λ11 and λ12, operating wavelengths of two optical modules in the access point 2 are respectively λ21 and λ22, and operating wavelengths of two optical modules in the access point 3 are respectively λ31 and λ32. Then, operating wavelengths of three optical modules included in one optical system in a convergence point are respectively λ11, λ21, and λ31, and operating wavelengths of three optical modules included in the other optical system are respectively λ12, λ22, and λ32.

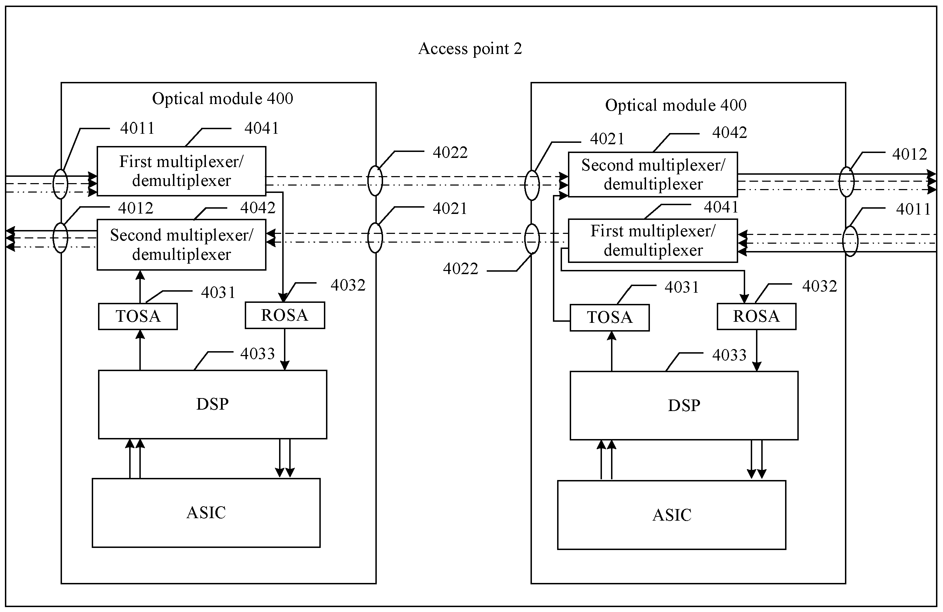

That operating wavelengths of two optical modules in a same access point are the same is used as an example. The access point 2 may use two optical modules 400 described in the embodiment corresponding to FIG. 4. FIG. 7 is a schematic structure of the access point 2. For convenience of subsequent description, the first optical input interface 4011 and the first optical output interface 4012 in the optical module 400 may be referred to as network ports, and the second optical input interface 4021 and the second optical output interface 4022 may be referred to as cascade ports, so that when the two optical modules 400 are connected by using a fiber, the two optical modules 400 are connected through cascade ports. In other words, a cascade port of one optical module 400 is correspondingly connected to a cascade port of the other optical module, and network ports of the two optical modules 400 are configured to respectively connect to the access point 1 and the access point 3.

The access point 2 further includes two line boards, and the line boards are configured to perform signal processing on signals output by the optical modules 400 or on signals to be input to the optical modules 400. For example, the line boards are application-specific integrated circuits (English: application specific integrated circuit, ASIC for short) shown in FIG. 7. Different optical modules are connected to different line boards, so that east and west directions of the access ring protect each other, and when any node fails, the other node may be used as a standby node and continues to work. The nodes herein include one optical module 400 and one line board.

When an access point uses the structure shown in FIG. 7, a convergence point may include two optical systems shown in FIG. 6.

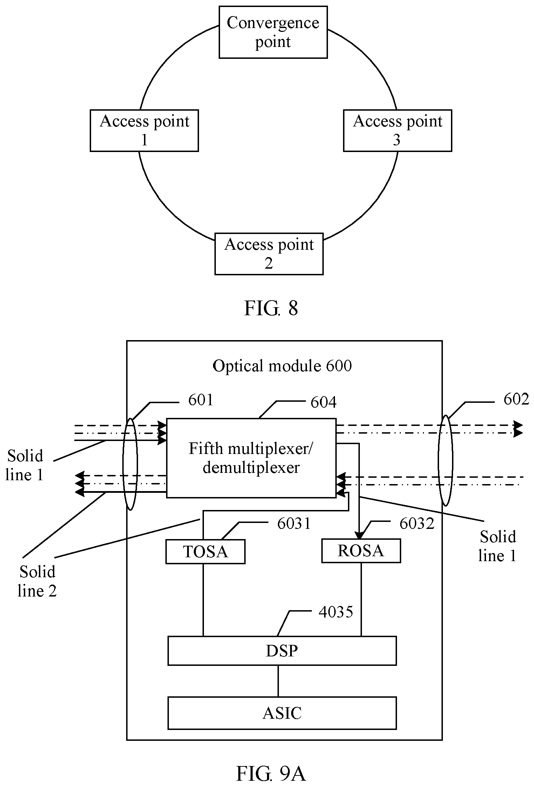

FIG. 8 is a schematic structural diagram of another access ring according to an embodiment of this application. The access ring uses a single-fiber bidirectional manner. The access ring may include N access points and a convergence point. FIG. 8 merely shows an example, and does not specifically limit quantities of access points and convergence points included in the access ring. Descriptions are provided herein by using an example in which the access ring includes three access points. The access points included in the access ring are respectively an access point 1, an access point 2, and an access point 3. The access point 2 is connected to both the access point 1 and the access point 3 by using fibers, and the convergence point is connected to both the access point 1 and the access point 3 by using fibers. The following provides descriptions by using a structure of the access point 2 as an example. For the other access points, refer to the structure of the access point 2. The access point 2 includes an optical module 600. As shown in FIG. 9A, the optical module 600 includes a fifth multiplexer/demultiplexer 604, an optical transmitter 6031, and an optical receiver 6032. It should be noted that an operating wavelength of the optical transmitter 6031 is different from an operating wavelength of the optical receiver 6032. Operating wavelengths of optical modules included in different access points are different. For example, operating wavelengths of optical modules in the access point 1 are λ110 and λ120, operating wavelengths of optical modules in the access point 2 are respectively λ210 and λ220, and operating wavelengths of optical modules in the access point 3 are respectively λ310 and λ320.

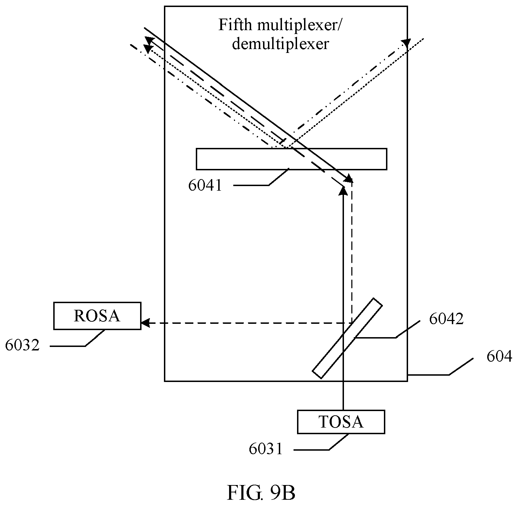

The fifth multiplexer/demultiplexer 604 includes two optical filters: a first optical filter 6041 and a second optical filter 6042, as shown in FIG. 9B. The first optical filter 6041 may be configured to transmit optical signals having the two wavelengths (λ210 and λ220), and reflect optical signals having wavelengths other than the wavelengths λ210 and λ220; or may be configured to reflect optical signals having the two wavelengths, and transmit optical signals having wavelengths other than the two wavelengths, and may be specifically a WDM. The second optical filter 6042 can distinguish between the optical signals having the wavelengths λ210 and λ220. For example, the second optical filter 6042 reflects the optical signal having the wavelength λ210, and transmits the optical signal having the wavelength λ220; or reflects the optical signal having the wavelength λ220, and transmits the optical signal having the wavelength λ210. That the operating wavelength of the optical receiver 6032 is λ210, and the operating wavelength of the optical transmitter 6031 is λ220 is used as an example herein. It should be noted that the optical transmitter 6031 may be a TOSA 6031, and the optical receiver 6032 may be an ROSA 6032.

In this embodiment, the fifth multiplexer/demultiplexer 604 filters out, from an optical signal 211 that is from the access point 1 and through two-level optical filtering, an optical signal 212 having a wavelength that can be received by the optical receiver 6032, transfers the optical signal 212 to the optical receiver 6032, and transfers an optical signal 213 that is filtered out and that has a wavelength other than the wavelengths λ210 and λ220 to the access point 3. The wavelength of the optical signal 212 is λ210. The optical transmitter 6031 transmits the optical signal 214 having the wavelength λ220, and the fifth multiplexer/demultiplexer 604 combines an optical signal 215 from the access point 3 and the received optical signal 214 into an optical signal 216, and then transfers the optical signal 216 to the access point 1. The optical signal 215 does not include optical signals having the wavelengths λ210 and λ220. The optical module 600 may further include two interfaces: a first optical interface 601 and a second optical interface 602, which are configured to respectively connect to the access point 1 and the access point 3.

Referring to FIG. 9A, a solid line 1 represents an optical signal having the wavelength λ210, a solid line 2 represents the optical signal having the wavelength λ220, and the other dashed lines represent optical signals having the other wavelengths. After the optical signal 214 that corresponds to the solid line 2 and that has the wavelength λ220 is sent through the TOSA 6031, optical signals 215 that are from the access point 2, that correspond to the dashed lines, and that have the other wavelengths and the optical signal 214 enter through the second optical interface 602, and after the signals are combined into the optical signal 216 at the fifth multiplexer/demultiplexer 604, the optical signal 216 is sent to the access point 1 through the first optical interface 601.

The fifth multiplexer/demultiplexer 604 receives the optical signal 211 that is sent by the access point 1 through the first optical interface 601, separates the optical signal 212 having the wavelength λ210 from the optical signal 211 received from the first optical interface 601, and sends the optical signal 212 to the BOSA 6034; filters out, from the optical signal 211 received from the first optical interface 401, the optical signal 213 having the wavelength other than the wavelengths λ210 and λ220, and sends the optical signal 213 to the access point 3 through the second optical interface 402. In FIG. 9A, the optical signal that corresponds to the solid line 1 and that has the wavelength λ210 and the optical signals that correspond to the dashed lines and that have the other wavelengths enter the fifth multiplexer/demultiplexer 604 through the first optical interface 401, and after the fifth multiplexer/demultiplexer 604 performs filtering, the optical signal 212 corresponding to the solid line 1 is sent to the ROSA 6032, and the optical signals 213 that correspond to the dashed lines and that have the other wavelength is sent through the second optical interface 402.

Optionally, the optical module 600 may further include a third signal processor 6033. The third signal processor 6033 may be a general purpose processor, a DSP, an application-specific integrated circuit, a field programmable gate array or another programmable logic device, a discrete gate or transistor logic device, a discrete hardware component, or the like. In FIG. 9A, that the third signal processor 6033 is a DSP 6033 is used as an example.

The third signal processor 6033 combines received at least two electrical signals into one electrical signal 1, and then sends the combined electrical signal 1 to the TOSA 6031. The TOSA 6031 converts the received electrical signal 1 sent by the DSP 6033 into the optical signal 214 having the wavelength λ220. The ROSA 6032 converts the received optical signal 212 that is sent by the fifth multiplexer/demultiplexer 604 and that has the wavelength λ210 into an electrical signal 2, and sends the electrical signal 2 to the third signal processor 6033. The third signal processor 6033 is further configured to: process the received electrical signal 2 into at least two electrical signals, and send the electrical signals.

The at least two electrical signals may be NRZ signals. The electrical signal 1 and the electrical signal 2 may be PAM signals. For example, a line board in the access point 2 can process two NRZ electrical signals, so that the electrical signal 1 and the electrical signal 2 may be PAM 4 signals.

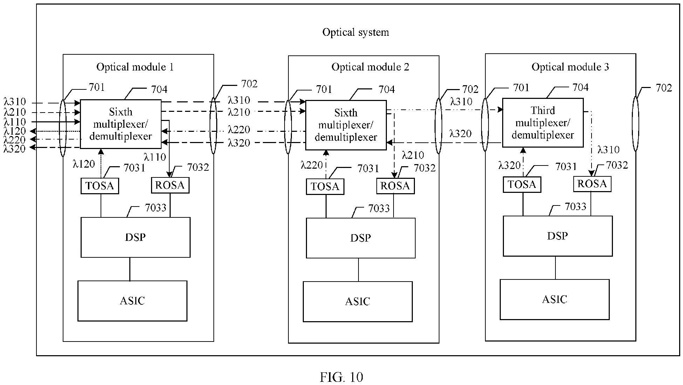

In this embodiment of this application, the convergence point may use an optical system including a plurality of the optical modules 600 shown in FIG. 9A, and a quantity of the optical modules in the optical system is equal to a quantity of access points in the access ring. In an architecture of the access ring shown in FIG. 8, the convergence point is connected to both the access point 1 and the access point 3. The convergence point may include one or two optical systems. A structure of an optical module included in the optical system is the same as a structure of an optical module included in an access point. The optical system includes three optical modules: an optical module 1, an optical module 2, and an optical module 3. The optical module 2 is in optical connection to the optical module 1 and the optical module 3, and the optical module 1 is connected to the access point 1. FIG. 10 is a schematic structural diagram of the convergence point. The optical module 1 corresponds to the access point 1, the optical module 2 corresponds to the access point 2, and the optical module 3 corresponds to the access point 3. An operating wavelength of an optical receiver in an optical module in the access point 1 is λ110, and then an operating wavelength of an optical transmitter in the optical module 1 in the optical system is λ110. An operating wavelength of an optical transmitter in the optical module in the access point 1 is λ120, and then an operating wavelength of an optical receiver in the optical module 1 in the optical system is λ120. An operating wavelength of an optical receiver in an optical module in the access point 2 is λ210, and then an operating wavelength of an optical transmitter in the optical module 2 in the optical system is λ210. An operating wavelength of an optical transmitter in the optical module in the access point 2 is λ220, and then an operating wavelength of an optical receiver in the optical module 2 in the optical system is λ220. An operating wavelength of an optical receiver in an optical module in the access point 3 is λ310, and then an operating wavelength of an optical transmitter in the optical module 3 in the optical system is λ310. An operating wavelength of an optical transmitter in the optical module in the access point 3 is λ320, and then an operating wavelength of an optical receiver in the optical module 3 in the optical system is λ320. Because the optical module 1, the optical module 2, and the optical module 3 are of a same structure, the following provides descriptions by using only the optical module 2 as an example, and the optical module 1 and the optical module 3 are not described repeatedly. The optical module 2 includes a sixth multiplexer/demultiplexer 7041, an optical transmitter 7031, and an optical receiver 7032.

The sixth multiplexer/demultiplexer 704 includes two optical filters: a third optical filter 7041 and a fourth optical filter 7042.

It should be noted that an operating wavelength of the optical transmitter 7031 is different from an operating wavelength of the optical receiver 7032. Operating wavelengths of optical modules included in different access points are different. For example, operating wavelengths of optical modules in the access point 1 are λ110 and λ120, operating wavelengths of optical modules in the access point 2 are respectively λ210 and λ220, and operating wavelengths of optical modules in the access point 3 are respectively λ310 and λ320.

The third optical filter 7041 may be configured to transmit optical signals having the two wavelengths (λ210 and λ220), and reflect an optical signal having a wavelength other than the wavelengths λ210 and λ220; or may be configured to reflect optical signals having the two wavelengths, and transmit an optical signal having a wavelength other than the two wavelengths, and may be specifically a WDM. The fourth optical filter 7042 can distinguish between the optical signals having the wavelengths λ210 and λ220. For example, the fourth optical filter 7042 reflects the optical signal having the wavelength λ210, and transmits the optical signal having the wavelength λ220; or reflects the optical signal having the wavelength λ220, and transmits the optical signal having the wavelength λ210. That the operating wavelength of the optical receiver 7032 is λ220, and the operating wavelength of the optical transmitter 7031 is λ210 is used as an example. It should be noted that the optical transmitter 7031 may be a TOSA 7031, and the optical receiver 7032 may be an ROSA 7032.

In this embodiment, the sixth multiplexer/demultiplexer 704 filters out, from an optical signal 31 that is from the optical module 1 and through two-level optical filtering, an optical signal 32 having a wavelength that can be received by the optical receiver 7032, transfers the optical signal 32 to the optical receiver 7032, and transfers an optical signal 33 that is filtered out and that has a wavelength other than the wavelengths λ210 and λ220 to the optical module 3. The wavelength of the optical signal 32 is λ220. The optical transmitter 7031 transmits an optical signal 34 having the wavelength λ210, and the sixth multiplexer/demultiplexer 704 combines an optical signal 35 from the optical module 3 and the received optical signal 34 into an optical signal 36, and then transfers the optical signal 36 to the optical module 1. The optical signal 35 does not include optical signals having the wavelengths λ210 and λ220. The optical module may further include two interfaces: a third optical interface 701 and a fourth optical interface 702, which are configured to respectively connect to the access point 1 and the access point 3.

Optionally, the optical module 2 may further include a fourth signal processor 7033. The fourth signal processor 7033 combines received at least two electrical signals into one electrical signal 1, and then sends the combined electrical signal 1 to the TOSA 7031, so that the TOSA 7031 converts the electrical signal 1 into the optical signal 34 having the wavelength λ210, and sends the optical signal 34 to the sixth multiplexer/demultiplexer 7041, and the third multiplexer/demultiplexer 7041 sends the optical signal 34 through the first optical output interface 7012. The second signal processor 7033 may be a general purpose processor, a digital signal processor (DSP), an application-specific integrated circuit, a field programmable gate array or another programmable logic device, a discrete gate or transistor logic device, a discrete hardware component, or the like. In FIG. 10 that the fourth signal processor 7033 is a DSP 7034 is used as an example.

The optical module may further include a laser diode driver (DRV), so that the fourth signal processor 7033 combines the received at least two electrical signals into one electrical signal 1, and then sends the electrical signal 1 to the DRV, and the DRV drives the TOSA 4031 to convert the electrical signal 1 into the optical signal 34 having the wavelength λ210.

The ROSA 4032 is further configured to: convert the received optical signal 32 that is sent by the sixth multiplexer/demultiplexer 7042 and that has the wavelength λ220 into an electrical signal 2, and send the electrical signal 2 to the fourth signal processor 7033. The fourth signal processor 7033 processes the received electrical signal 2 into at least two electrical signals, and sends the electrical signals.

The at least two electrical signals may be NRZ signals. The electrical signal 1 and the second electrical signal 2 may be PAM signals. For example, a line board (for example, an ASIC) in the optical module 2 can process two NRZ electrical signals, so that the electrical signal 1 and the electrical signal 2 may be PAM 4 signals.

In this embodiment of this application, a same access point may include two same optical modules, and a same convergence point includes two same optical systems. Two optical modules of a same access point protect each other, and two optical systems of a same convergence point protect each other. Operating wavelengths of two optical modules in a same access point may be the same or may be different. When operating wavelengths of two optical modules in a same access point are the same, operating wavelengths of two optical systems in the same access point are the same. When operating wavelengths of two optical modules in a same access point are different, operating wavelengths of two optical systems in a convergence point are also different.

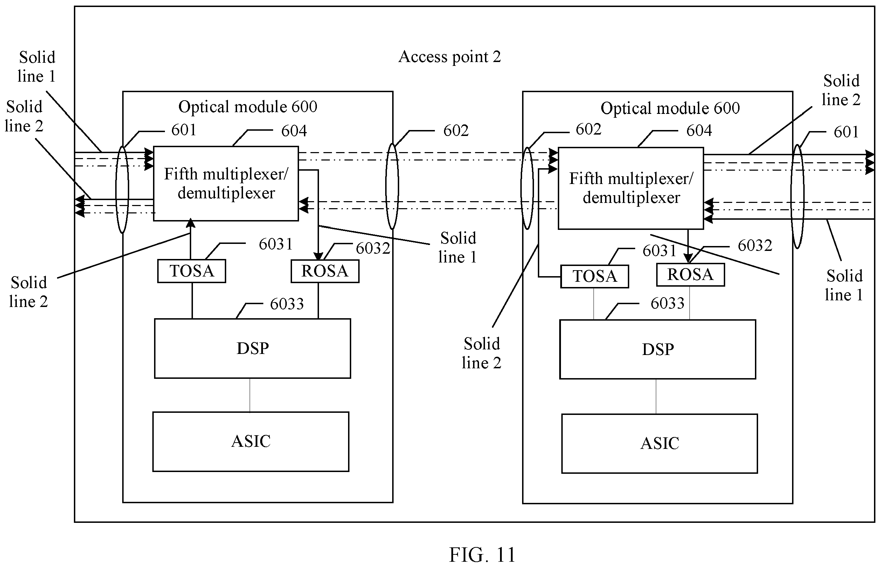

That operating wavelengths of two optical modules in a same access point are the same is used as an example. The access point 2 may use two optical modules described in the embodiment corresponding to FIG. 9A, as shown in FIG. 11. For convenience of subsequent description, the first optical interfaces 601 in the optical modules may be referred to as network ports, and the second optical interfaces 602 may be referred to as cascade ports, so that when the two optical modules are connected by using a fiber, the two optical modules are connected through cascade ports. In other words, a cascade port of one optical module is correspondingly connected to a cascade port of the other optical module by using a fiber, and the network ports of the two optical modules are configured to respectively connect to the access point 1 and the access point 3.

The access point 2 further includes two line boards, and the line boards are configured to perform signal processing on signals output by the optical modules or on signals to be input to the optical modules. For example, the line boards are application-specific integrated circuits (English: application specific integrated circuit, ASIC for short) shown in FIG. 11. Different optical modules are connected to different line boards, so that east and west directions of the access ring protect each other, and when any node fails, the other node may be used as a standby node and continues to work. The nodes herein include one optical module and one line board.

When an access point uses the structure shown in FIG. 11, a convergence point may include two optical systems shown in FIG. 10.

The following describes optical power in a solution used in the embodiments of this application. For example, an optical module in any embodiment of this application is a 50 GE optical module, a used TOSA is a directly modulated laser (English: Directly Modulated Laser, DML for short) TOSA, and an ROSA is a photodiode PIN ROSA. Light out-coupling efficiency of the DML TOSA is greater than 0 dBm, and receiver sensitivity of the PIN ROSA is -13 dBm, so that an optical power budget is 13 dBm. A loss of a 20 km fiber is 20 km ^{∗} 0.275 dB/km = 5.5 dB, a maximum loss of optical layer penetration is 5 DB, and a 2.5 dB fiber connector loss is reserved. Based on this, an optical module constructed by using the DML TOSA and the PIN ROSA and the solution provided in this application can meet a requirement for a 20 km access ring. When an optical module is a 50 GE optical module, a signal processor described in any embodiment is configured to process two 25 G electrical signals, and a Baud rate is 25 G. When a length of an access ring is less than or equal to 20 km, dispersion compensation does not need to be considered. Based on this, the embodiments of this application may be applied to a PTN-based metropolitan area network. Networking features of the metropolitan area network are as follows: There are a relatively small quantity of access points, and the quantity is generally not greater than eight; an access ring is relatively short, and is generally not longer than 20 km. According to the foregoing solution, not only a performance requirement is met, but also implementation is easy under a condition of same performance, and costs are relatively low.

When the access ring needs a higher bandwidth, an optical module may be added in an access point or a convergence point, to expand a bandwidth. For example, when a 100 G bandwidth is needed, two 50 GE optical modules may be used.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. An optical module, wherein the optical module is located in a first network device in an access ring, the access ring further comprises a second network device and a third network device, both the second network device and the third network device are in optical connection to the first network device, the first network device is applied to an access point, and the optical module comprises:
a first multiplexer/demultiplexer and an optical receiver, wherein
the first multiplexer/demultiplexer is configured to: receive a first optical signal from the second network device, separate a second optical signal from the first optical signal, and transfer the second optical signal to the optical receiver, wherein the second optical signal has a first wavelength;
the first multiplexer/demultiplexer is further configured to transfer a third optical signal to the third network device, wherein the third optical signal is an optical signal that is separated from the first optical signal and that has a wavelength other than the first wavelength; and
the optical receiver is configured to receive the second optical signal, wherein an operating wavelength of the optical receiver is the first wavelength.

2. The optical module according to claim 1, wherein the optical module further comprises a second multiplexer/demultiplexer and an optical transmitter, wherein
the optical transmitter is configured to transmit a fourth optical signal to the second multiplexer/demultiplexer, wherein the fourth optical signal has the first wavelength; and
the second multiplexer/demultiplexer is configured to: combine a fifth optical signal from the third network device and the fourth optical signal into a sixth optical signal, and send the sixth optical signal to the second network device.

3. The optical module according to claim 1, wherein the optical module further comprises an optical transmitter, wherein
the optical transmitter is configured to transmit a seventh optical signal to the first multiplexer/demultiplexer, wherein the seventh optical signal has a second wavelength; and
the first multiplexer/demultiplexer is further configured to: combine an eighth optical signal from the third network device and the seventh optical signal into a ninth optical signal, and send the ninth optical signal to the second network device.

4. An optical module, wherein the optical module is located in a first network device in an access ring, the access ring further comprises a second network device and a third network device, both the second network device and the third network device are in optical connection to the first network device, the first network device is applied to an access point, and the optical module comprises:
a first multiplexer/demultiplexer and an optical transmitter, wherein
the optical transmitter is configured to transmit a first optical signal to the first multiplexer/demultiplexer, wherein the first optical signal has a first wavelength; and
the first multiplexer/demultiplexer is configured to: combine a second optical signal from the second network device and the first optical signal into a third optical signal, and send the third optical signal to the third network device.

5. A network device, wherein the network device is applied to an access point in an access ring, and the network device comprises at least one optical module according to any one of claims 1 to 4.

6. An optical system, wherein the optical system is applied to a convergence point in an access ring, the access ring comprises N access points, operating wavelengths of optical transmitters comprised in the N access points are different, the optical system comprises N optical modules, the N access points are in a one-to-one correspondence to the N optical modules, an operating wavelength of an optical receiver comprised in the N^{th} optical module is the same as an operating wavelength of an optical transmitter comprised in an N^{th} access point, and N is a positive integer greater than 1, wherein
a first optical module comprised in the N optical modules comprises a first multiplexer/demultiplexer and an optical receiver, and an operating wavelength of the optical receiver is a first wavelength;
the first multiplexer/demultiplexer is configured to receive a first optical signal;
the first multiplexer/demultiplexer is configured to: separate, from the first optical signal, a second optical signal that is from a first access point comprised in the N access points, and transfer the second optical signal to the optical receiver, wherein the second optical signal has the first wavelength;
the optical receiver is configured to receive the second optical signal sent by the first multiplexer/demultiplexer; and
the first multiplexer/demultiplexer is further configured to transfer a third optical signal to a second optical module in the N optical modules, wherein the second optical module is in optical connection to the first optical module, and the third optical signal is an optical signal that is separated from the first optical signal and that has a wavelength other than the first wavelength.

7. The optical system according to claim 6, wherein the first optical module further comprises a second multiplexer/demultiplexer and an optical transmitter, wherein
the optical transmitter is configured to transmit a fourth optical signal to the second multiplexer/demultiplexer, wherein the second optical signal has the first wavelength; and
the second multiplexer/demultiplexer is configured to: combine a fifth optical signal from the second optical module and the fourth optical signal into a sixth optical signal, and send the sixth optical signal.

8. The optical system according to claim 6, wherein the first optical module further comprises an optical transmitter, wherein
the optical transmitter is configured to transmit a seventh optical signal to the first multiplexer/demultiplexer, wherein the seventh optical signal has a second wavelength; and
the first multiplexer/demultiplexer is further configured to: combine an eighth optical signal from the second optical module and the seventh optical signal into a ninth optical signal, and send the ninth optical signal.

9. An optical system, wherein the optical system is applied to a convergence point in an access ring, the access ring comprises N access points, operating wavelengths of optical receivers comprised in the N access points are different, the optical system comprises N optical modules, the N access points are in a one-to-one correspondence to the N optical modules, an operating wavelength of an optical transmitter comprised in the N^{th} optical module is the same as an operating wavelength of an optical receiver comprised in an N^{th} access point, and N is a positive integer greater than 1, wherein
a first optical module comprised in the N optical modules comprises a first multiplexer/demultiplexer and an optical transmitter, and an operating wavelength of the optical transmitter is a first wavelength;
the optical transmitter is configured to transmit a first optical signal to the first multiplexer/demultiplexer, wherein the first optical signal has the first wavelength; and
the first multiplexer/demultiplexer is configured to: combine a second optical signal from a second optical module in the N optical modules and the first optical signal into a third optical signal, and send the third optical signal, wherein the second optical module is in optical connection to the first optical module.

10. A network device, wherein the network device is applied to a convergence point in an access ring, and the network device comprises at least one optical system according to any one of claims 6 to 9.

11. A communications system, comprising the network device according to claim 5 and the network device according to claim 10.
